# FASCICULE DE BREVET EUROPEEN

(11) **EP 0 665 795 B1**
(45) Date de publication et mention de la délivrance du brevet: **17.07.1996**
(21) Numéro de dépôt: 93924109.7
(22) Date de dépôt: 26.10.1993
(51) Int. Cl.: B64C 27/10, B64C 27/12

(54) **VOILURE TOURNANTE A DEUX ROTORS COAXIAUX**
DREHFLÜGEL MIT ZWEI GLEICHACHSIGEN ROTOREN
ROTARY WING COMPRISING TWO COAXIAL ROTORS

(30) Priorité: 27.10.1992 FR 9213266
(43) Date de publication de la demande: 09.08.1995
(73) Titulaire: DURAND, Georgette, F-13012 Marseille (FR)
(72) Inventeur: DURAND, Georgette, F-13012 Marseille (FR)
(74) Mandataire: Roman, Michel
(86) Numéro de dépôt international: FR9301044
(87) Numéro de publication internationale: WO9410034

(56) Documents cités:
- FR-A- 1 331 306
- FR-A- 2 581 613
- US-A- 2 740 595

## Description

La présente invention a pour objet une voilure tournante à deux rotors coaxiaux.

Elle est destinée à équiper des hélicoptères ou des appareils pour le levage ou le transport de marchandises, et peut s'appliquer aussi bien à des appareils pilotés qu'à des engins télécommandés, ou encore à des maquettes volantes.

Les dispositifs à voilures tournantes sont utilisés depuis longtemps et ont atteint un haut degré de perfectionnement.

Les plus connus comportent un seul rotor de sustentation et font appel à une hélice auxiliaire dite "hélice de queue", tournant dans un plan vertical passant par l'axe du rotor, pour compenser le couple de rotation et contrôler l'appareil en direction. Ce système consomme une part non négligeable de l'énergie produite par le moteur qui, n'étant utilisée ni pour la sustentation ni pour la propulsion, représente en fait une perte de puissance.

Il existe des engins à deux rotors coaxiaux tournant en sens inverse dont les couples se compensent, ce qui supprime la nécessité de l'hélice de queue et améliore le rendement tout en diminuant l'encombrement. Toutefois, les moyens mécaniques nécessaires pour entraîner et contrôler les parties tournantes sont en général d'une très grande complexité, due essentiellement à la nécessité de faire passer la transmission de puissance et l'ensemble des commandes dans une série de tubes concentriques. La conséquence en est une fiabilité réduite de l'ensemble et un prix de revient très élevé.

Le brevet FR 85 07 061 (FR-A-2 581 613), du même inventeur, propose un dispositif à deux rotors contrarotatifs selon le préambule de la revendication 1 permettant de simplifier notablement les dits moyens mécaniques grâce à deux couronnes portant les pales et entraînées par un jeu de galets simples ou doubles servant également de support et de guidage aux dites couronnes. Ce système comporte cependant un certain nombre de défauts, à savoir un manque de rigidité des couronnes porte-pales entraînant des risques de vibration, un système compliqué et fragile d'entraînement des galets par le ou les moteurs, ainsi qu'une usure rapide des galets due à leur surface portante perpendiculaire à leur axe.

Le dispositif selon la présente invention supprime tous ces inconvenients. En effet, il permet d'obtenir un ensemble extrêmement robuste et fiable, d'un prix de revient compétitif et totalement exempt de vibrations.

Il est constitué par la combinaison de couronnes porte-pales cylindriques, guidées et entraînées en rotation par des galets communs monoblocs en élastomère, à axe vertical et surface portante inclinée, et d'un système d'accouplement direct des arbres desdits galets avec le ou les moteurs.

Sur les dessins schématiques annexés, donnés à titre d'exemple non limitatif d'une des formes de réalisation de l'objet de l'invention:
la figure 1 représente une coupe axiale de l'ensemble du dispositif, suivant les flèches B-B de la figure 2,
la figure 2 est une coupe horizontale partielle suivant les flèches A-A de la figure 1,
la figure 3 représente à une échelle différente, en coupe verticale axiale, une variante dans laquelle les deux rotors sont situés au-dessus des galets, et montre un système d'orientation des plateaux à plateaux guidés par galets,
La figure 4 est un schéma de principe d'un mécanisme d'orientation des pales à plateau unique et,
les figures 5 et 6 représentent en coupe verticale axiale, des variantes dans lesquelles la couronne interne a un diamètre supérieur plus petit que son diamètre inférieur.

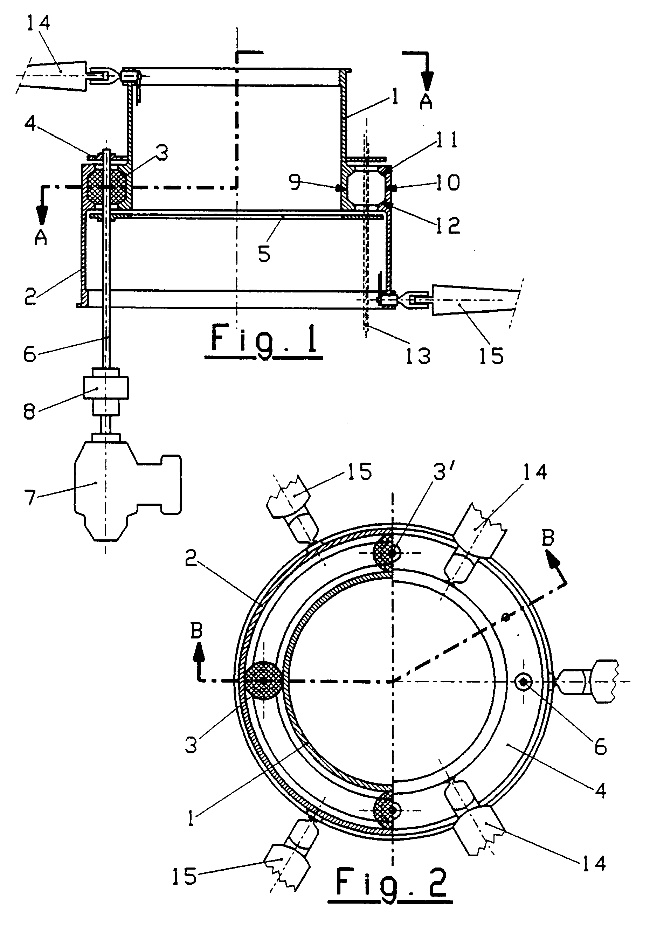

Le dispositif, figures 1 à 3, est constitué de deux couronnes porte-pales 1, 2 cylindriques et coaxiales guidées et entraînées par des galets 3 situés dans un même plan horizontal et montés sur des arbres tournant dans des paliers portés par une couronne fixe supérieure 4 et une platine inférieure 5 solidaire du châssis (non représenté).

Les galets 3, 3' sont soit moteurs et solidaires d'arbres d'entraînement 6 accouplés directement à des moteurs 7 par l'intermédiaire d'un embrayage 8, soit porteurs. Ces galets sont monoblocs et réalisés en élastomère et comportent des surfaces supérieures en forme de troncs de cône. Ils tournent entre deux chemins de roulement 9, 10 circulaires et horizontaux, respectivement solidaires de la couronne cylindrique interne 1 et de la couronne cylindrique externe 2. Ces chemins de roulement, dont la section a la forme d'un "U" couché, se trouvent en regard l'un de l'autre et sont constitués d'une surface cylindrique verticale encadrée par deux surfaces inclinées 11, 12 correspondant aux surfaces coniques des galets. La forme et les dimensions des chemins de roulement 9, 10 et des galets 3 sont déterminées pour que ces derniers puissent entraîner les couronnes porte-pales 1, 2 sans glissement et sans aucun jeu, et de manière à ce que l'usure normale des galets soit compensée par leur élasticité.

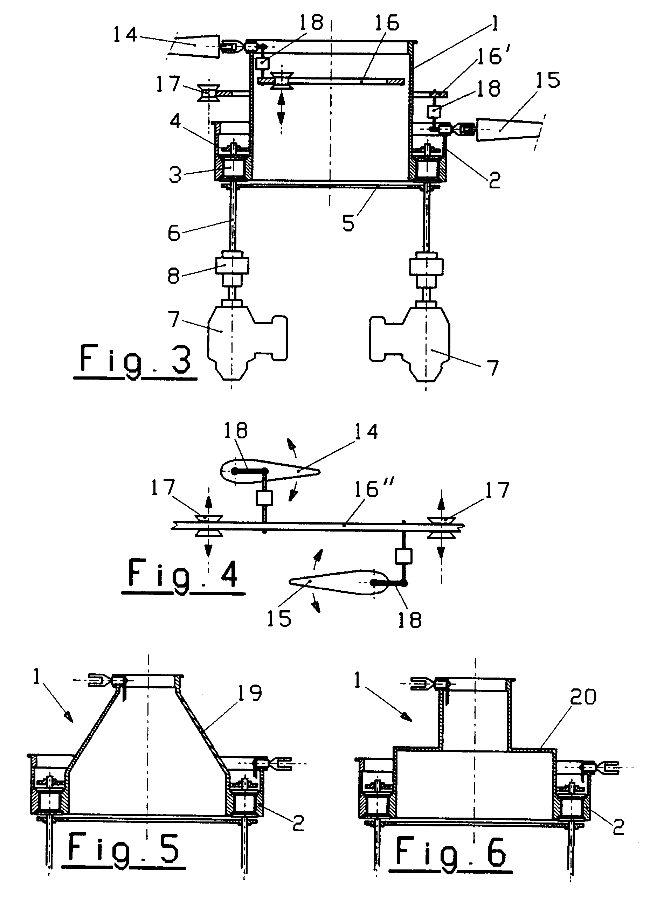

Les chemins de roulement 9, 10 peuvent être creux (figure 1) ou être en saillie, les galets 3 ayant dans ce dernier cas la forme d'un "diabolo" (figure 3).

Dans certaines applications, les galets et chemins de roulement seront dentés pour éviter toute possibilité de glissement.

La tringlerie 13 de commande de position des pales 14 du rotor supérieur pourra avantageusement passer entre les deux chemins de roulement 9, 10 puis à l'extérieur de la couronne porte-pales supérieure 1 de manière à dégager entièrement l'intérieur des couronnes cylindriques, ce qui permet par exemple d'y installer un parachute de secours.

Les pales 15 du rotor inférieur peuvent être montées soit au-dessous du plan de roulement des galets 3, le chemin de roulement 10 de la couronne cylindrique inférieure 2 étant dans ce cas situé en partie haute de cette dernière, ou au contraire être montées au-dessus des galets, le chemin de roulement étant alors en partie basse de la couronne cylindrique inférieure (figure 3).

L'orientation des pales est commandée par l'intermédiaire de deux plateaux 16, 16' dont la position verticale et l'inclinaison sont contrôlés par des galets mobiles 17.

La commande manuelle de pas général ("pitch") peut être supprimée et remplacée par des éléments à masselottes centrifuges 18 modifiant la longueur des tringles agissant sur l'orientation des pales 14, 15 en fonction de la vitesse de rotation.

Les deux plateaux 16, 16' peuvent être actionnées ensembles, ou même être remplacé par un plateau unique 16'' (figure 4). Dans ce cas, les biellettes 18 d'orientation des pales d'un rotor auront leur direction inversée par rapport à celle du second rotor.

Dans le but de diminuer la traînée de l'appareil, la couronne interne 1 peut être formée d'un cylindre inférieur et d'un cylindre supérieur de diamètre plus faible, ces deux cylindres étant reliés par un tronc de cône 19 (figure 5) ou une partie horizontale 20 (figure 6).

Dans une variante d'éxecution, le rotor inférieur a un diamètre sensiblement plus faible que le rotor supérieur, ses pales 15 étant plus larges que les pales 14 dudit rotor supérieur et ne servant qu'à assurer l'anti-couple, la portance étant entièrement assurée par le rotor supérieur.

Le positionnement des divers éléments constitutifs donne à l'objet de l'invention un maximum d'effets utiles qui n'avaient pas été, à ce jour, obtenus par des dispositifs similaires.

## Revendications

1. Dispositif de voilure tournante à deux rotors coaxiaux contrarotatifs, destinée à équiper des hélicoptères ou des appareils pour le levage ou le transport de marchandises, mais pouvant s'appliquer aussi bien à des appareils pilotés qu'à des engins télécommandes, ou encore à des maquettes volantes, comprenant des rotors constitués de deux couronnes porte-pales coaxiales interne (1) et externe (2) guidées par des galets porteurs (3') et mises en rotation par des galets moteurs (3) au moyen d'un système d'entraînement actionné par un ou des moteurs (7) par l'intermédiaire d'un embrayage (8), lesdits galets, communs aux deux couronnes, ayant des axes verticaux et étant situés dans un même plan horizontal, la couronne externe (2) étant cylindrique, les galets moteurs et porteurs tournent entre deux chemins de roulement (9, 10) circulaires et horizontaux, lesdits chemins de roulement se trouvant en regard l'un de l'autre et étant respectivement solidaires de la couronne interne (1) et de la couronne externe (2),
caractérisé en ce que la couronne interne (1) est cylindrique ou conique et en ce que les galets moteurs (3) sont solidaires d'arbres d'entraînement (6) accouplés directement à des moteurs (7) par l'intermédiaire d'embrayages (8), et en ce que les galets moteurs et porteurs comportent des surfaces supérieure et inférieure en forme de tronc de cône, lesdits chemins de roulement étant constitués d'une surface cylindrique verticale encadrée par deux surfaces inclinées (11, 12) correspondant aux surfaces coniques des galets.

2. Dispositif selon la revendication 1, se caractérisant par le fait que les chemins de roulement (9, 10) sont creux.

3. Dispositif selon la revendication 1, se caractérisant par le fait que les chemins de roulement (9, 10) sont en saillie.

4. Dispositif selon l'une quelconque des revendications précédentes, se caractérisant par le fait que la tringlerie (13) de commande de position des pales (14) portées par la couronne interne (1) passe entre les deux chemins de roulement (9, 10) puis à l'extérieur de ladite couronne interne de manière à dégager entièrement l'intérieur des deux couronnes (1, 2).

5. Dispositif selon l'une quelconque des revendications précédentes, se caractérisant par le fait que les pales (15) portées par la couronne cylindrique externe (2) sont montées au-dessous du plan de roulement des galets (3, 3'), le chemin de roulement (10) de ladite couronne étant situé en partie haute de cette dernière.

6. Dispositif selon l'une quelconque des revendications 1 à 5, se caractérisant par le fait que les pales (15) portées par la couronne cylindrique externe (2) sont montées au-dessus du plan de roulement des galets (3, 3'), le chemin de roulement (10) de ladite couronne étant situé en partie basse de cette dernière.

7. Dispositif selon l'une quelconque des revendications précédentes, se caractérisant par le fait que l'orientation des pales (14, 15) est commandée par l'intermédiaire de deux plateaux (16, 16') dont la position et l'inclinaison sont contrôlés par des galets mobiles (17).

8. Dispositif selon l'une quelconque des revendications 1 à 6, se caractérisant par le fait que l'orientation des pales (14, 15) est commandée par l'intermédiaire de deux plateaux (16, 16') actionnées ensemble ou remplacés par un plateau unique (16''), les biellettes (18) d'orientation des pales d'un rotor ayant leur direction inversée par rapport à celle du second rotor.

9. Dispositif selon l'une quelconque des revendications précédentes, se caractérisant par le fait que la commande de pas général ("pitch") est obtenue par des éléments à masselottes centrifuges (18) modifiant la longueur des tringles agissant sur l'orientation des pales (14, 15) en fonction de la vitesse de rotation.

10. Dispositif selon l'une quelconque des revendications précédentes, se caractérisant par le fait que la couronne interne (1) est formée d'un cylindre inférieur et d'un cylindre supérieur de diamètre plus faible, ces deux cylindres étant reliés par un tronc de cône (19) ou une partie horizontale (20).

11. Dispositif selon l'une quelconque des revendications précédentes, se caractérisant par le fait que le rotor inférieur a un diamètre sensiblement plus faible que le rotor supérieur, ses pales (15) étant plus larges que les pales (14) dudit rotor supérieur et ne servant qu'à assurer l'anti-couple, la portance étant entièrement assurée par le rotor supérieur.

12. Dispositif selon l'une quelconque des revendications précédentes, se caractérisant par le fait que les galets (3, 3') et les chemins de roulement (9, 10) sont dentés.

13. Dispositif selon l'une quelconque des revendications précédentes, se caractérisant par le fait que les galets (3, 3') sont monoblocs et réalisés en élastomère.

## Claims

1. Rotating wing system comprising two counter-rotating coaxial rotors designed to be fitted on helicopters or aircraft for the lifting and transport of goods but capable of use on both piloted equipment and remote controlled equipment or flying models, and comprising rotors consisting of two coaxial blade bearing rings, inner (1) and outer (2), guided by bearing rollers (3') and rotated by motor rollers (3) using a drive system operated by one or several motors (7) through a clutch (8), the said rollers, common to both rings, having vertical axes and being situated in the same horizontal plane, the outer ring (2) being cylindrical, the motor rollers and rotary bearers between two circular and horizontal races (9, 10), the said races being positioned one opposite the other and forming integral parts of the inner ring (1) and outer ring (2) respectively,
characterized in that the inner ring (1) is cylindrical or conical and the motor rollers (3) are integral parts of the drive shafts (6) coupled directly to the motors (7) through clutches (8) and in that the motor rollers and bearers have upper and lower surfaces in the form of truncated cone, the said cages consisting of a vertical cylindrical surface framed by two sloping surfaces (11, 12) corresponding to the roller conical surfaces.

2. Device as per claim 1 characterized in that the roller cages (9, 10) are hollow.

3. Device as per claim 1 in that the roller cages (9, 10) are projecting.

4. Device as per any one of the previous claims characterized in that the blade (14) position control linkage (13) carried on the inner ring (1) passes between two roller cages (9, 10) and then outside the said inner ring so as to entirely clear the inside of the two rings (1, 2).

5. Device as per any one of the previous claims characterized in that the blades (15) borne by the outer cylindrical ring (2) are fitted below the roller rolling plane (3, 3'), the cage (10) of the said ring being situated in the upper part of the latter.

6. Device as per any one of claims 1 to 5, characterized in that the blades (15) borne by the external cylindrical ring (2) are fitted above the ring roller plane (3, 3'), the cage (10) of the said ring being situated in the lower part of the latter.

7. Device as per any one of the aforesaid claims characterized in that the orientation of blades (14, 15) is controlled by two plates (16, 16') whose position and inclination are controlled by mobile rollers (17).

8. Device as per any one of claims 1 to 6 characterized in that the orientation of blades (14, 15) is controlled by two plates (16, 16') actuated together or replaced by a single plate (16''), the link rods (18) for orienting the blades of a rotor having their position inverted relative to that of the second rotor.

9. Device as per any one of the previous claims characterized in that the general pitch control is obtained using centrifugal flyweights (18) altering the length of the linkage rods acting on the blade orientation (14, 15) in relation to the rotation speed.

10. Device as per any one of the previous claims characterized in that the inner ring (1) is formed of a lower cylinder and an upper cylinder of smaller diameter, these two cylinders being linked by a truncated cone (19) or a horizontal part (20).

11. Device as per any one of the previous claims characterized in that the lower rotor has a diameter which is notably less than the upper rotor, its blades (15) being wider than the blades (14) of the said upper rotor and only used for anti-torque purposes, the lift being entirely contributed by the upper rotor.

12. Device as per any one of the previous claims characterized in that the rollers (3, 3') and roller cages (9, 10) are toothed.

13. Device as per any one of the previous claims characterized in that rollers (3, 3') form a single part and are executed in elastomer.

## Patentansprüche

1. Drehflügelvorrichtung mit zwei gegenseitig laufenden koaxialen Rotoren, bestimmt zur Ausrüstung von Hubschraubern oder Hub- bzw. Warentransportgeräten, die sowohl für bemannte wie für ferngesteuerte Geräte sowie für Flugmodelle anwendbar ist, bestehend aus zwei koaxialen Blatt-tragenden Kränzen, innen (1) und außen (2), geführt von Tragrollen (3') und in Rotation gebracht durch Antriebsrollen (3), die mittels eines Antriebssystems von einem oder mehreren Motoren (7) über eine Kupplung (8) angetrieben werden, wobei die besagten Rollen, gemeinsam für die beiden Kränze, vertikale Achsen haben und sich auf der selben horizontalen Ebene befinden, der äußere Kranz (2) zylindrisch ist, die Antriebs- und Tragrollen zwischen zwei kreisförmigen und horizontalen Laufringen (9, 10) drehen, die besagten Laufringe sich gegenüber liegen und jeweils mit dem inneren Kranz (1) und dem äußeren Kranz (2) kraftschlüssig verbunden sind,
dadurch gekennzeichnet, daß der innere Kranz (1) zylindrisch oder konisch, und die Antriebsrollen (3) kraftschlüssig mit Antriebswellen (6) verbunden sind, die direkt über Kupplungen (8) an Motoren (7) gekoppelt sind, und daß die Antriebs- und Tragrollen obere und untere Oberflächen in Form von Kegelstümpfen aufweisen, die besagten Laufringe aus einer vertikalen zylindrischen Oberfläche gebildet werden, gerahmt von zwei geneigten Oberflächen (11, 12), die mit den konischen Oberflächen der Rollen übereinstimmen.

2. Vorrichtung gemäß Anspruch 1, dadurch gekennzeichnet, daß die Laufringe (9, 10) hohl sind.

3. Vorrichtung gemäß Anspruch 1, dadurch gekennzeichnet, daß die Laufringe (9, 10) überstehen.

4. Vorrichtung gemäß irgendeinem der vorstehenden Ansprüche, dadurch gekennzeichnet, daß das Gestänge (13) zur Positionssteuerung der von dem inneren Kranz (1) getragenen Rotorblätter (14) zwischen den beiden Laufringen (9, 10) und dann außerhalb dem besagten inneren Kranz durchführen, so daß das Innere der beiden Kränze (1, 2) völlig frei ist.

5. Vorrichtung gemäß irgendeinem der vorstehenden Ansprüche, dadurch gekennzeichnet, daß die von dem äußeren zylindrischen Kranz (2) getragenen Rotorblätter (15) unterhalb der Laufebene der Rollen (3, 3') angebracht sind, und der Laufring (10) des besagten Kranzes sich im oberen Teil dieses letzteren befindet.

6. Vorrichtung gemäß irgendeinem der Ansprüche 1 bis 5, dadurch gekennzeichnet, daß die von dem äußeren zylindrischen Kranz (2) getragenen Rotorblätter (15) oberhalb der Laufebene der Rollen (3, 3') angebracht sind, und der Laufring (10) des besagten Kranzes sich im unteren Teil dieses letzteren befindet.

7. Vorrichtung gemäß irgendeinem der vorstehenden Ansprüche, dadurch gekennzeichnet, daß die Ausrichtung der Rotorblätter (14, 15) mittels zwei Scheiben (16, 16') gesteuert wird, deren Position und Neigung durch bewegliche Rollen (17) kontrolliert werden.

8. Vorrichtung gemäß irgendeinem der Ansprüche 1 bis 6, dadurch gekennzeichnet, daß die Ausrichtung der Rotorblätter (14, 15) mittels zwei Scheiben (16, 16') gesteuert wird, welche gemeinsam betätigt oder durch eine einzige Scheibe (16'') ersetzt werden, wobei die Richtung der Ausrichtungsstangen (18) der Rotorblätter eines Rotors in Bezug auf die des zweiten Rotors umgekehrt ist.

9. Vorrichtung gemäß irgendeinem der vorstehenden Ansprüche, dadurch gekennzeichnet, daß die Blattwinkelsteuerung ("pitch") durch zentrifugale Fliengewichtelemente (18) erreicht wird, welche die Länge der auf die Ausrichtung der Rotorblätter (14, 15) einwirkenden Stangen in Abhängigkeit der Drehzahl ändern.

10. Vorrichtung gemäß irgendeinem der vorstehenden Ansprüche, dadurch gekennzeichnet, daß der innere Kranz (1) aus einem unteren Zylinder und einem oberen Zylinder mit kleinerem Durchmesser gebildet wird, wobei diese beiden Zylinder durch einen Kegelstumpf (19) oder einen horizontalen Teil (20) verbunden sind.

11. Vorrichtung gemäß irgendeinem der vorstehenden Ansprüche, dadurch gekennzeichnet, daß der untere Rotor einen wesentlich kleineren Durchmesser als der obere Rotor hat, seine Rotorblätter (15) breiter sind als die Rotorblätter (14) des besagten oberen Rotors und nur dazu dienen das Gegenwirkmoment auszugleichen, wobei der Auftrieb völlig von dem oberen Rotor gewährleistet wird.

12. Vorrichtung gemäß irgendeinem der vorstehenden Ansprüche, dadurch gekennzeichnet, daß die Rollen (3, 3') und die Laufringe (9, 10) gezahnt sind.

13. Vorrichtung gemäß irgendeinem der vorstehenden Ansprüche, dadurch gekennzeichnet, daß die Rollen (3, 3') aus einem Stück bestehen und aus Elastomer hergestellt sind.
